# EUROPÄISCHE PATENTANMELDUNG

(11) **EP 3 531 667 A1**
(43) Veröffentlichungstag der Anmeldung: **28.08.2019**
(21) Anmeldenummer: 18158619.9
(22) Anmeldetag: 26.02.2018
(51) Int. Cl.: H04L 29/08, H04W 8/18

(54) **HERSTELLUNG VON KOMMUNIKATIONSFUNKTIONEN FÜR TEILNEHMERIDENTITÄTSMODULE**

(71) Anmelder: Deutsche Telekom AG, 53113 Bonn (DE)
(72) Erfinder: Kaliner, Stefan, 53639 Königswinter (DE)
(74) Vertreter: Raible Deissler Lehmann Patentanwälte PartG mbB

(57) **Zusammenfassung**

Die Erfindung betrifft einen Ladeserver (100) für die Bereitstellung von Kommunikationsprofilen für eine Charge (109) mit einer Vielzahl von Teilnehmeridentitätsmodulen (111-1 bis 111-N), welche für die Kommunikation über ein Kommunikationsnetzwerk vorgesehen sind, wobei jedem Teilnehmeridentitätsmodul (111-1 bis 111-N) ein Datenpaar mit einer elektronischen Identifikation des Teilnehmeridentitätsmoduls (111-1 bis 111-N) und einem öffentlichen kryptographischen Schlüssel eines kryptographischen Schlüsselpaars des Teilnehmeridentitätsmoduls (111-1 bis 111-N) zugeordnet ist, wobei das kryptographische Schlüsselpaar den öffentlichen kryptographischen Schlüssel und einen in dem Teilnehmeridentitätsmodul (111-1 bis 111-N) gespeicherten privaten kryptographischen Schlüssel umfasst, mit: einer Netzwerkschnittstelle (101), welche ausgebildet ist, ein Datensignal mit der Vielzahl der Datenpaare an einen entfernten Profilserver (200) über ein Kommunikationsnetzwerk (400) auszusenden, wobei die Netzwerkschnittstelle (101) ferner ausgebildet ist, ansprechend auf das Aussenden der Vielzahl der Datenpaare, die Vielzahl von Profildaten von dem entfernten Profilserver (200) zu empfangen, wobei jedes empfangene Profildatum jeweils einem Teilnehmeridentitätsmodul (111-1 bis 111-N) zugeordnet ist und eine elektronische Identifikation des Teilnehmeridentitätsmoduls (111-1 bis 111-N) sowie ein mit dem ausgesendeten öffentlichen kryptographischen Schlüssel des Teilnehmeridentitätsmoduls (111-1 bis 111-N) verschlüsseltes Kommunikationsprofil umfasst, wobei jedes Kommunikationsprofil zumindest einen Teilnehmerparameter des jeweiligen Teilnehmeridentitätsmoduls für die Kommunikation in dem Kommunikationsnetzwerk (400) angibt; einem Prozessor (103), welcher ausgebildet ist, die verschlüsselten Kommunikationsprofile den Teilnehmeridentitätsmodulen (111-1 bis 111-N) anhand der jeweils empfangenen elektronischen Identifikation zuzuordnen; und einer Geräteschnittstelle (105), welche mit den Teilnehmeridentitätsmodulen (111-1 bis 111-N) elektronisch verbindbar und ausgebildet ist, die verschlüsselten Kommunikationsprofile zu den Teilnehmeridentitätsmodulen (111-1 bis 111-N) zu übertragen, um die Kommunikationsfunktion in dem jeweiligen Teilnehmeridentitätsmodul (111-1 bis 111-N) herzustellen.

## Beschreibung

Die vorliegende Erfindung betrifft die Herstellung von Kommunikationsfunktionen für eingebettete oder integrierte Teilnehmeridentitätsmodule, insbesondere eUICC Module (eUICC: embedded Universal Integrated Circuit Card) und iUICC-Module (iUICC: integrated Universal Integrated Circuit Card), für die Gerätekommunikation.

Zur Kommunikation über ein mobiles Kommunikationsnetzwerk eines Netzwerkbetreibers werden Teilnehmeridentitätsmodule, sog. SIM-Module (SIM: Subscriber Identity Module), eingesetzt, in welchen die individuellen Zugangsdaten des jeweiligen Netzwerkteilnehmers in Form eines Kommunikationsprofils, sog. SIM-Profils, gespeichert sind. Das SIM-Profil enthält beispielsweise die Teilnehmeridentifikation (IMSI) und den zugehörigen Geheimschlüssel (K) zur Authentifizierung gegenüber dem mobilen Kommunikationsnetzwerk.

Die Teilnehmeridentitätsmodule können als herkömmliche SIM-Karten bereitgestellt werden, welche in ein Kommunikationsgerät in der Regel zusammen mit einem darauf gespeicherten SIM-Profil des Teilnehmers eingelegt werden. Darüber hinaus sind Teilnehmeridentitätsmodule, sog. eUICC, welche mit dem Kommunikationsgerät fest verbunden, beispielsweise eingelötet sind, sowie integrierte Teilnehmeridentitätsmodule, sog. iUICC welche als Schaltkreise bereits in den Modem- oder Baseband-Chips eines Kommunikationsgerätes integriert sind, bekannt. Die Vorteile der iUICC wie Kosten- und Platzersparnis durch Weglassen eines separaten UICC Bauelements, geringer Stromverbrauch machen sie insbesondere geeignet für IoT-Anwendungen (loT: Internet of Things), beispielswese für Sensoren, welche die erfassten Messdaten über ein Kommunikationsnetzwerk aussenden sollen.

Ein Problem im Zusammenhang mit der Anwendung der eUICC oder iUICC für IoT-Anwendungen ist die Bereitstellung der SIM-Profile. Üblicherweise wird gemäß des GSMA eSIM Standards ein SIM-Profil auf Anfrage eines Kommunikationsgerätes diesem dediziert zugestellt. Dazu baut das Kommunikationsgerät eine Internet-Datenverbindung zu einem Profil-Server auf. Der Profil-Server erzeugt nun ein SIM-Profil im Auftrag eines Mobilfunk-Netzbetreibers (MNO) und versendet es an das anfragende Kommunikationsgerät. Während des gesamten Vorgangs von der Anfrage bis zur Auslieferung (Download) ist eine Online-Verbindung zwischen dem Kommunikationsgerät und dem Profil-Server erforderlich. Dieser Ansatz ist für diejenigen Fälle konzipiert, in welchen eine natürliche Person das Kommunikationsgerät bedient.

Der vorstehend beschriebene Ansatz ist jedoch ineffizient, wenn die Geräte, wie beispielsweise Sensoren für die IoT-Anwendungen, bereits während ihrer Produktion mit Kommunikationsfunktionen, welche durch die SIM-Profile der eUICC oder iUICC bereitgestellt werden, versehen werden sollen. In der Regel sind dabei SIM-Profile in großer Anzahl erforderlich, so dass der vorstehend beschriebene Prozess mit einzelnen Anfragen und zugehörigen Antworten vielfach wiederholt werden müsste, nämlich zumindest einmal für jedes produzierte Gerät.

Es ist daher die Aufgabe der vorliegenden Erfindung, ein effizienteres Konzept für die Bereitstellung von Kommunikationsprofilen, insbesondere SIM-Profilen, für die Herstellung von Kommunikationsfunktionen für eine Vielzahl von Teilnehmeridentitätsmodulen anzugeben.

Diese Aufgabe wird durch die Merkmale der unabhängigen Ansprüche gelöst. Vorteilhafte Weiterbildungsformen sind Gegenstand der abhängigen Ansprüche, der Beschreibung sowie der beiliegenden Figuren.

Gemäß einem ersten Aspekt betrifft die Erfindung einen Ladeserver für die Bereitstellung von Kommunikationsprofilen für eine Charge mit einer Vielzahl von Teilnehmeridentitätsmodulen, welche für die Kommunikation, insbesondere Datenkommunikation, über ein Kommunikationsnetzwerk, insbesondere über ein mobiles Kommunikationsnetzwerk, vorgesehen sind, wobei jedem Teilnehmeridentitätsmodul ein Datenpaar mit einer elektronischen Identifikation des Teilnehmeridentitätsmoduls und einem öffentlichen kryptographischen Schlüssel eines kryptographischen Schlüsselpaars des Teilnehmeridentitätsmoduls zugeordnet ist, wobei das kryptographische Schlüsselpaar den öffentlichen kryptographischen Schlüssel und einen in dem Teilnehmeridentitätsmodul gespeicherten privaten kryptographischen Schlüssel umfasst, mit: einer Netzwerkschnittstelle, welche ausgebildet ist, ein Datensignal mit der Vielzahl der Datenpaare an einen entfernten Profilserver über ein Kommunikationsnetzwerk auszusenden, wobei die Netzwerkschnittstelle ferner ausgebildet ist, ansprechend auf das Aussenden der Vielzahl der Datenpaare, die Vielzahl von Profildaten von dem entfernten Profilserver zu empfangen, wobei jedes empfangene Profildatum jeweils einem Teilnehmeridentitätsmodul zugeordnet ist und eine elektronische Identifikation des Teilnehmeridentitätsmoduls sowie ein mit dem ausgesendeten öffentlichen kryptographischen Schlüssel des Teilnehmeridentitätsmoduls verschlüsseltes Kommunikationsprofil umfasst, wobei jedes Kommunikationsprofil zumindest einen Teilnehmerparameter des jeweiligen Teilnehmeridentitätsmoduls für die Kommunikation in dem Kommunikationsnetzwerk angibt; einem Prozessor, welcher ausgebildet ist, die verschlüsselten Kommunikationsprofile den Teilnehmeridentitätsmodulen anhand der jeweils empfangenen elektronischen Identifikation zuzuordnen; und einer Geräteschnittstelle, welche mit den Teilnehmeridentitätsmodulen elektronisch verbindbar und ausgebildet ist, die verschlüsselten Kommunikationsprofile zu den Teilnehmeridentitätsmodulen zu übertragen, um die Kommunikationsfunktion in dem jeweiligen Teilnehmeridentitätsmodul herzustellen.

Die Kommunikation zwischen dem Ladeserver und dem Profilserver findet in einer Ausführungsform über ein Kommunikationsnetzwerk statt, das sich von dem Kommunikationsnetzwerk für die Teilnehmerkommunikation unterscheidet. Das Kommunikationsnetzwerk für die Kommunikation zwischen dem Ladeserver und dem Profilserver kann beispielsweise ein drahtgebundenes oder ein drahtloses Kommunikationsnetzwerk sein.

Das Kommunikationsnetzwerk für die Teilnehmerkommunikation ist ein mobiles Kommunikationsnetzwerk, beispielsweise ein 3G, 4G oder 5G Kommunikationsnetzwerk.

In einer Ausführungsform finden die Kommunikation zwischen dem Ladeserver und dem Profilserver sowie die Teilnehmerkommunikation über dasselbe Kommunikationsnetzwerk, beispielsweise über das mobile Kommunikationsnetzwerk statt.

Durch die Übertragung der verschlüsselten Kommunikationsprofile werden diese in die Teilnehmeridentitätsmodule geladen.

Die Kommunikationsprofile sind in einer Ausführungsform SIM-Profile.

Die Teilnehmeridentitätsmodule sind in einer Ausführungsform für die Gerät-zu-Gerät-Kommunikation über ein Kommunikationsnetzwerk vorgesehen.

Der Teilnehmerparameter ist dem jeweiligen Teilnehmeridentitätsmodul zugeordnet. Der Teilnehmerparameter kann beispielsweise eine Teilnehmeridentifikation, wie IMSI und einen kryptographischen Geheimschlüssel (K) umfassen.

Das Teilnehmeridentitätsmodul kann ein integriertes Teilnehmeridentitätsmodul wie iUICC oder ein eingebettetes Teilnehmeridentitätsmodul, wie eUICC, sein.

Die elektronische Identifikation kann beispielsweise die eID gemäß dem GSMA- oder ETSI-Standard sein. Die elektronische Identifikation kann eine beliebige Identifikation sein, welche das jeweilige Teilnehmeridentitätsmodul identifiziert.

In einer Ausführungsform ist die Netzwerkschnittstelle ausgebildet, die Vielzahl der Datenpaare, insbesondere als ein elektronisches Datenpaket, zu empfangen.

Die Netzwerkschnittstelle kann in einer Ausführungsform ein erstes Schnittstellenmodul für die Teilnehmerkommunikation über ein Kommunikationsnetzwerk, beispielsweise ein mobiles Kommunikationsnetzwerk, sowie ein zweites Schnittstellenmodul für den Empfang der Datenpaare über das Kommunikationsnetzwerk zwischen dem Ladeserver und dem Profilserver aufweisen.

Die Netzwerkschnittstelle kann jedoch sowohl für die Kommunikation über das Kommunikationsnetzwerk als auch für den Empfang der Datenpaare vorgesehen sein.

In einer Ausführungsform ist die Netzwerkschnittstelle ausgebildet, die Vielzahl der Datenpaare während derselben Datenübertragung, insbesondere als ein elektronisches Datenpaket, an den entfernten Profilserver auszusenden.

In einer Ausführungsform ist die Netzwerkschnittstelle ausgebildet, die Vielzahl der Datenpaare für die Charge der Teilnehmeridentitätsmodule, insbesondere als ein elektronisches Datenpaket, zu empfangen.

In einer Ausführungsform ist die Netzwerkschnittstelle ausgebildet, die Vielzahl der Datenpaare mit einem kryptographischen Zertifikat, das dem Ladeserver zugeordnet ist, auszusenden, wobei das kryptographische Zertifikat für die Überprüfung der Identität des Ladeservers durch den entfernten Profilserver vorgesehen ist.

In einer Ausführungsform ist der Prozessor ausgebildet, die Vielzahl der Datenpaare mit dem kryptographischen Zertifikat datentechnisch zu verknüpfen.

In einer Ausführungsform ist die Geräteschnittstelle ausgebildet, die Datenpaare aus den Teilnehmeridentitätsmodulen elektronisch auszulesen.

In einer Ausführungsform umfasst der Ladeserver einen elektronischen Speicher, welcher eingerichtet ist, die Vielzahl der über die Netzwerkschnittstelle empfangenen Datenpaare und/oder die Vielzahl der Profildaten zu speichern.

In einer Ausführungsform umfasst der Ladeserver einen weiteren elektronischen Speicher, welcher eingerichtet ist, die Vielzahl der über die zweite Netzwerkschnittstelle empfangenen Profildaten zu speichern.

In einer Ausführungsform ist die Geräteschnittstelle eine drahtgebundene Schnittstelle, insbesondere für die Bus-Kommunikation, insbesondere für die Ethernet-Buskommunikation, mit den Teilnehmeridentitätsmodulen oder eine USB-Schnittstelle oder eine AT-Schnittstelle für AT-Befehle.

In einer Ausführungsform sind die Kommunikationsprofile eSIM-Profile (eSIM: embeded Subscriber Identity Module, Teilnehmeridentitätsmodul), wobei die Teilnehmeridentitätsmodule eUICC-Module (eUICC: embedded Universal Intergrated Circuit Card) oder iUICC-Module (integrated Universal Integrated Circuit Card) sind.

In einer Ausführungsform sind die Kommunikationsprofile beispielsweise für die IoT-Kommunikation (loT: Internet of Things) vorgesehen, wobei jedes Kommunikationsprofil eine Teilnehmeridentifikation (IMSI) und einen Geheimschlüssel (K) zum Zugang zu einem mobilen Kommunikationsnetzwerk umfasst.

Gemäß einem zweiten Aspekt betrifft die Erfindung einen Profilserver für die Bereitstellung von Kommunikationsprofilen, insbesondere SIM-Profilen, für eine Charge von Kommunikationsgeräten mit einer Vielzahl von eingebetteten oder integrierten Teilnehmeridentitätsmodulen, wobei jedes Kommunikationsprofil zumindest einen Teilnehmerparameter des jeweiligen Teilnehmeridentitätsmoduls zur Kommunikation, insbesondere Datenkommunikation, in einem Kommunikationsnetzwerk angibt, wobei jedem Teilnehmeridentitätsmodul ein Datenpaar mit einer elektronischen Identifikation des Teilnehmeridentitätsmoduls und einem öffentlichen kryptographischen Schlüssel eines kryptographischen Schlüsselpaars des Teilnehmeridentitätsmoduls, zugeordnet ist, wobei das kryptographische Schlüsselpaar den öffentlichen kryptographischen Schlüssel und einen in dem Teilnehmeridentitätsmodul gespeicherten privaten kryptographischen Schlüssel umfasst, mit: einer Netzwerkschnittstelle, welche ausgebildet ist, ein Datensignal mit der Vielzahl der Datenpaare von einem entfernten Ladeserver über ein Kommunikationsnetzwerk zu empfangen; einem Prozessor, welcher ausgebildet ist, für jedes Datenpaar
- ein Kommunikationsprofil auf der Basis der in dem jeweiligen Datenpaar enthaltenen elektronischen Identifikation bereitzustellen,
- das bereitgestellte Kommunikationsprofil mit dem in dem Datenpaar enthaltenen öffentlichen kryptographischen Schlüssel zu verschlüsseln, um ein verschlüsseltes Kommunikationsprofil zu erhalten; und
- das verschlüsselte Kommunikationsprofil mit der in dem Datenpaar enthaltenen elektronischen Identifikation zu verknüpfen, um ein Profildatum mit zumindest dem verschlüsselten Kommunikationsprofil und der elektronischen Identifikation zu erhalten; wobei die Netzwerkschnittstelle ausgebildet ist, ein Sendesignal mit der Vielzahl der Profildaten über ein Kommunikationsnetzwerk an den entfernten Ladeserver zu übermitteln.

Die Kommunikation zwischen dem Ladeserver und dem Profilserver findet in einer Ausführungsform über ein Kommunikationsnetzwerk statt, das sich von dem Kommunikationsnetzwerk für die Teilnehmerkommunikation unterscheidet. Das Kommunikationsnetzwerk für die Kommunikation zwischen dem Ladeserver und dem Profilserver kann beispielsweise ein drahtgebundenes oder ein drahtloses Kommunikationsnetzwerk sein.

Das Kommunikationsnetzwerk für die Teilnehmerkommunikation ist ein mobiles Kommunikationsnetzwerk, beispielsweise ein 3G, 4G oder 5G Kommunikationsnetzwerk.

In einer Ausführungsform finden die Kommunikation zwischen dem Ladeserver und dem Profilserver sowie die Teilnehmerkommunikation über dasselbe Kommunikationsnetzwerk, beispielsweise über das mobile Kommunikationsnetzwerk statt.

In einer Ausführungsform ist der Prozessor ausgebildet, die Kommunikationsprofile aus einem Speicher auszulesen oder zu erzeugen, bevorzugt individuell zu erzeugen.

Der Ladeserver gemäß dem ersten Aspekt und der Profilserver gemäß dem zweiten Aspekt können in einer Ausführungsform zusammen wirken und ein Herstellungssystem formen.

Die Kommunikationsprofile sind in einer Ausführungsform SIM-Profile.

Die Teilnehmeridentitätsmodule sind in einer Ausführungsform für die Gerät-zu-Gerät-Kommunikation über ein Kommunikationsnetzwerk vorgesehen.

Der Teilnehmerparameter ist dem jeweiligen Teilnehmeridentitätsmodul zugeordnet. Der Teilnehmerparameter kann beispielsweise eine Teilnehmeridentifikation, wie IMSI und einen kryptographischen Geheimschlüssel (K) umfassen.

Das Teilnehmeridentitätsmodul kann ein integriertes Teilnehmeridentitätsmodul wie iUICC oder ein eingebettetes Teilnehmeridentitätsmodul, wie eUICC, sein.

Gemäß einem dritten Aspekt betrifft die Erfindung ein Verfahren Bereitstellen von Kommunikationsprofilen, insbesondere SIM-Profilen, für eine Charge mit einer Vielzahl von eingebetteten oder integrierten Teilnehmeridentitätsmodulen, wobei jedem eingebetteten oder integrierten Teilnehmeridentitätsmodul ein Datenpaar mit einer elektronischen Identifikation des eingebetteten oder integrierten Teilnehmeridentitätsmoduls und einem öffentlichen kryptographischen Schlüssel eines kryptographischen Schlüsselpaars des eingebetteten oder integrierten Teilnehmeridentitätsmoduls, zugeordnet ist, wobei das kryptographische Schlüsselpaar den öffentlichen kryptographischen Schlüssel und einen in dem eingebetteten oder integrierten Teilnehmeridentitätsmodul gespeicherten privaten kryptographischen Schlüssel umfasst, mit: Aussenden eines Datensignals mit der Vielzahl der Datenpaare an einen entfernten Profilserver über ein Kommunikationsnetzwerk; ansprechend auf das Aussenden der Vielzahl der Datenpaare, Empfangen der Vielzahl von Profildaten von dem entfernten Profilserver, wobei jedes empfangene Profildatum jeweils einem eingebetteten oder integrierten Teilnehmeridentitätsmodul zugeordnet ist und eine elektronische Identifikation des Teilnehmeridentitätsmoduls sowie ein mit dem ausgesendeten öffentlichen Schlüssel des Teilnehmeridentitätsmoduls verschlüsseltes Kommunikationsprofil angibt, wobei jedes Kommunikationsprofil zumindest einen Parameter zur Kommunikation in dem Kommunikationsnetzwerk umfasst; Zuordnen der verschlüsselten Kommunikationsprofile zu den eingebetteten oder integrierten Teilnehmeridentitätsmodulen anhand der empfangenen elektronischen Identifikationen; und Übertragen der verschlüsselten Kommunikationsprofile zu den eingebetteten oder integrierten Teilnehmeridentitätsmodulen, um die Kommunikationsfunktion in jedem eingebetteten oder integrierten Teilnehmeridentitätsmodul herzustellen.

In einer Ausführungsform steuert der Ladeserver kontrolliert den gesamten Verfahrensablauf.

In einer Ausführungsform umfasst das Verfahren die Schritte des Empfangens der Vielzahl der Datenpaare, beispielsweise von einem Server eines Herstellers der eingebetteten oder integrierten Teilnehmeridentitätsmodule, sowie des Speicherns der Vielzahl der Datenpaare.

Das Verfahren kann durch den Ladeserver gemäß dem ersten Aspekt ausgeführt werden.

Die Kommunikation zwischen dem Ladeserver und dem Profilserver findet in einer Ausführungsform über ein Kommunikationsnetzwerk statt, das sich von dem Kommunikationsnetzwerk für die Teilnehmerkommunikation unterscheidet. Das Kommunikationsnetzwerk für die Kommunikation zwischen dem Ladeserver und dem Profilserver kann beispielsweise ein drahtgebundenes oder ein drahtloses Kommunikationsnetzwerk sein.

Das Kommunikationsnetzwerk für die Teilnehmerkommunikation ist ein mobiles Kommunikationsnetzwerk, beispielsweise ein 3G, 4G oder 5G Kommunikationsnetzwerk.

In einer Ausführungsform finden die Kommunikation zwischen dem Ladeserver und dem Profilserver sowie die Teilnehmerkommunikation über dasselbe Kommunikationsnetzwerk, beispielsweise über das mobile Kommunikationsnetzwerk statt.

In einer Ausführungsform umfasst das Verfahren das Empfangen eines Datensignals mit der Vielzahl der Datenpaare von dem entfernten Ladeserver über ein Kommunikationsnetzwerk durch einen Profilserver; für jedes Datenpaar:
- Bereitstellen eines Kommunikationsprofils auf der Basis der in dem jeweiligen Datenpaar enthaltenen elektronischen Identifikation durch den Profilserver,
- Verschlüsseln des bereitgestellten Kommunikationsprofils mit dem in dem Datenpaar enthaltenen öffentlichen kryptographischen Schlüssel durch den Profilserver, um ein verschlüsseltes Kommunikationsprofil zu erhalten;
- Verknüpfen des verschlüsselten Kommunikationsprofils mit der in dem Datenpaar enthaltenen elektronischen Identifikation durch den Profilserver, um ein Profildatum mit dem verschlüsselten Kommunikationsprofil und der elektronischen Identifikation zu erhalten; und Aussenden eines Sendesignals mit der Vielzahl der Profildaten durch den Profilserver über ein Kommunikationsnetzwerk an den entfernten Ladeserver.

Der Profilserver kann der Profilserver nach dem zweiten Aspekt sein.

Die Kommunikationsprofile sind in einer Ausführungsform SIM-Profile.

Die Teilnehmeridentitätsmodule sind in einer Ausführungsform für die Gerät-zu-Gerät-Kommunikation über ein Kommunikationsnetzwerk vorgesehen.

Der Teilnehmerparameter ist dem jeweiligen Teilnehmeridentitätsmodul zugeordnet. Der Teilnehmerparameter kann beispielsweise eine Teilnehmeridentifikation, wie IMSI und einen kryptographischen Geheimschlüssel (K) umfassen.

Das Teilnehmeridentitätsmodul kann ein integriertes Teilnehmeridentitätsmodul wie iUICC oder ein eingebettetes Teilnehmeridentitätsmodul, wie eUICC, sein.

Gemäß einem vierten Aspekt betrifft die Erfindung ein Verfahren für die Bereitstellung von Kommunikationsprofilen für eine Charge mit einer Vielzahl von eingebetteten oder integrierten Teilnehmeridentitätsmodulen, wobei jedes Kommunikationsprofil zumindest einen Teilnehmerparameter des jeweiligen Teilnehmeridentitätsmoduls zur Kommunikation, insbesondere Datenkommunikation, in einem Kommunikationsnetzwerk angibt, wobei jedem eingebetteten oder integrierten Teilnehmeridentitätsmodul ein Datenpaar mit einer elektronischen Identifikation des eingebetteten oder integrierten Teilnehmeridentitätsmoduls und einem öffentlichen kryptographischen Schlüssel eines kryptographischen Schlüsselpaars des eingebetteten oder integrierten Teilnehmeridentitätsmoduls zugeordnet ist, wobei das jeweilige kryptographische Schlüsselpaar den öffentlichen kryptographischen Schlüssel und einen in dem Teilnehmeridentitätsmodul gespeicherten privaten kryptographischen Schlüssel umfasst, mit: Empfangen eines Datensignals mit der Vielzahl der Datenpaare von einem entfernten Ladeserver über ein Kommunikationsnetzwerk durch einen Profilserver; für jedes Datenpaar:
- Bereitstellen eines Kommunikationsprofils auf der Basis der in dem jeweiligen Datenpaar enthaltenen elektronischen Identifikation durch den Profilserver,
- Verschlüsseln des bereitgestellten Kommunikationsprofils mit dem in dem Datenpaar enthaltenen öffentlichen kryptographischen Schlüssel durch den Profilserver, um ein verschlüsseltes Kommunikationsprofil zu erhalten;
- Verknüpfen des verschlüsselten Kommunikationsprofils mit der in dem Datenpaar enthaltenen elektronischen Identifikation durch den Profilserver, um ein Profildatum mit dem verschlüsselten Kommunikationsprofil und der elektronischen Identifikation zu erhalten; und Aussenden eines Sendesignals mit der Vielzahl der Profildaten durch den Profilserver über ein Kommunikationsnetzwerk an den entfernten Ladeserver.

Die Teilnehmeridentitätsmodule können bereits in Kommunikationsgeräten integriert oder eingebettet sein.

Die Kommunikationsprofile sind in einer Ausführungsform SIM-Profile.

Die Teilnehmeridentitätsmodule sind in einer Ausführungsform für die Gerät-zu-Gerät-Kommunikation über ein Kommunikationsnetzwerk vorgesehen.

Der Teilnehmerparameter ist dem jeweiligen Teilnehmeridentitätsmodul zugeordnet. Der Teilnehmerparameter kann beispielsweise eine Teilnehmeridentifikation, wie IMSI und einen kryptographischen Geheimschlüssel (K) umfassen.

Das Teilnehmeridentitätsmodul kann ein integriertes Teilnehmeridentitätsmodul wie iUICC oder ein eingebettetes Teilnehmeridentitätsmodul, wie eUICC, sein.

Das Verfahren kann durch den Ladeserver nach dem ersten Aspekt und den Profilserver nach dem zweiten Aspekt ausgeführt werden.

Die Kommunikation zwischen dem Ladeserver und dem Profilserver findet in einer Ausführungsform über ein Kommunikationsnetzwerk statt, das sich von dem Kommunikationsnetzwerk für die Teilnehmerkommunikation unterscheidet. Das Kommunikationsnetzwerk für die Kommunikation zwischen dem Ladeserver und dem Profilserver kann beispielsweise ein drahtgebundenes oder ein drahtloses Kommunikationsnetzwerk sein.

Das Kommunikationsnetzwerk für die Teilnehmerkommunikation ist ein mobiles Kommunikationsnetzwerk, beispielsweise ein 3G, 4G oder 5G Kommunikationsnetzwerk.

In einer Ausführungsform finden die Kommunikation zwischen dem Ladeserver und dem Profilserver sowie die Teilnehmerkommunikation über dasselbe Kommunikationsnetzwerk, beispielsweise über das mobile Kommunikationsnetzwerk statt.

Weitere Ausführungsbeispiele werden bezugnehmend auf die beiliegenden Figuren erläutert. Es zeigen:
Fig. 1 ein Blockdiagramm eines Ladeservers;
Fig. 2 ein Blockdiagram eines Profilservers; und
Fig. 3 ein Ablauf eines Herstellungsverfahrens.

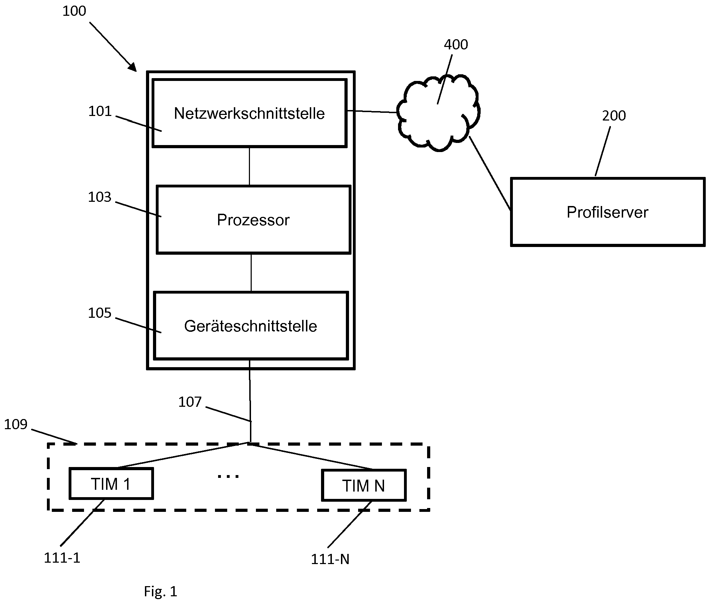

Fig. 1 zeigt einen Ladeserver 100 für Herstellen von Kommunikationsfunktionen für eine Charge 109 mit einer Vielzahl von Teilnehmeridentitätsmodulen 111-1 bis 111-N, welche beispielsweise für die Gerät-zu-Gerät-Kommunikation über ein Kommunikationsnetzwerk vorgesehen sind, wobei jedem Teilnehmeridentitätsmodul 111-1 bis 111-N ein Datenpaar mit einer elektronischen Identifikation des Teilnehmeridentitätsmoduls 111-1 bis 111-N und einem öffentlichen kryptographischen Schlüssel eines kryptographischen Schlüsselpaars des Teilnehmeridentitätsmoduls 111-1 bis 111-N zugeordnet ist, wobei das kryptographische Schlüsselpaar den öffentlichen kryptographischen Schlüssel und einen in dem Teilnehmeridentitätsmodul 111-1 bis 111-N gespeicherten privaten kryptographischen Schlüssel umfasst.

In einer Ausführungsform sind die Kommunikationsprofile eSIM-Profile, wobei die Teilnehmeridentitätsmodule 111-1 bis 111-N eUICC-Module (eUICC: embedded Universal Intergrated Circuit Card) oder iUICC-Module (integrated Universal Integrated Circuit Card) sind.

Der Ladeserver 100 umfasst eine Netzwerkschnittstelle 101, welche ausgebildet ist, ein Datensignal mit der Vielzahl der Datenpaare an einen entfernten Profilserver 200 über ein Kommunikationsnetzwerk 400 auszusenden, wobei die Netzwerkschnittstelle 101 ferner ausgebildet ist, ansprechend auf das Aussenden der Vielzahl der Datenpaare, Profildaten von dem entfernten Profilserver 200 zu empfangen, wobei jedes empfangene Profildatum jeweils einem Teilnehmeridentitätsmodul 111-1 bis 111-N zugeordnet ist und eine elektronische Identifikation des Teilnehmeridentitätsmoduls 111-1 bis 111-N sowie ein mit dem ausgesendeten öffentlichen kryptographischen Schlüssel des Teilnehmeridentitätsmoduls 111-1 bis 111-N verschlüsseltes Kommunikationsprofil umfasst, wobei jedes Kommunikationsprofil zumindest einen Teilnehmerparameter des jeweiligen Teilnehmeridentitätsmoduls für die Kommunikation in einem Kommunikationsnetzwerk, beispielsweise einem mobilen Kommunikationsnetzwerk, angibt.

Die Kommunikation zwischen dem Ladeserver 100 und dem Profilserver 200 findet in einer Ausführungsform über das Kommunikationsnetzwerk 400 statt, das sich von dem Kommunikationsnetzwerk für die Teilnehmerkommunikation unterscheidet. Das Kommunikationsnetzwerk für die Kommunikation zwischen dem Ladeserver 100 und dem Profilserver 200 kann beispielsweise ein drahtgebundenes oder ein drahtloses Kommunikationsnetzwerk sein.

Das Kommunikationsnetzwerk für die Teilnehmerkommunikation ist ein mobiles Kommunikationsnetzwerk, beispielsweise ein 3G, 4G oder 5G Kommunikationsnetzwerk.

In einer Ausführungsform finden die Kommunikation zwischen dem Ladeserver 100 und dem Profilserver 200 sowie die Teilnehmerkommunikation über dasselbe Kommunikationsnetzwerk, beispielsweise über das mobile Kommunikationsnetzwerk statt.

Der Ladeserver 100 umfasst ferner einem Prozessor 103, welcher ausgebildet ist, die verschlüsselten Kommunikationsprofile den Teilnehmeridentitätsmodulen 111-1 bis 111-N anhand der jeweils empfangenen elektronischen Identifikation zuzuordnen.

Der Ladeserver 100 umfasst ferner eine Geräteschnittstelle 105, welche mit den Teilnehmeridentitätsmodulen 111-1 bis 111-N elektronisch verbindbar und ausgebildet ist, die verschlüsselten Kommunikationsprofile zu den Teilnehmeridentitätsmodulen 111-1 bis 111-N zu übertragen, um die Kommunikationsfunktion in dem jeweiligen Teilnehmeridentitätsmodul 111-1 bis 111-N herzustellen.

Die Geräteschnittstelle 105 ist in einer Ausführungsform eine drahtgebundene Bus-Schnittstelle für die Bus-Kommunikation, insbesondere für die Ethernet-Buskommunikation, über einen Kommunikationsbus 107, beispielsweise Profibus, mit den Teilnehmeridentitätsmodulen 111-1 bis 111-N.

In einer Ausführungsform ist der Profilserver 200 kein Element des Ladeservers 100.

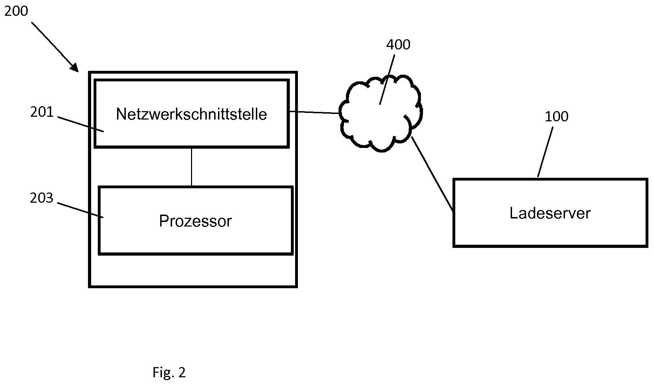

Fig. 2 zeigt einen Profilserver 200 für die Bereitstellung von Kommunikationsprofilen für eine Charge 109 mit einer Vielzahl von Teilnehmeridentitätsmodulen 111-1 bis 111-N, welche insbesondere für die Gerät-zu-Gerät-Kommunikation über ein Kommunikationsnetzwerk vorgesehen sind, wobei jedes Kommunikationsprofil zumindest einen Teilnehmerparameter des jeweiligen Teilnehmeridentitätsmoduls 111-1 bis 111-N für die Kommunikation in einem Kommunikationsnetzwerk, beispielsweise einem mobilen Kommunikationsnetzwerk, angibt, wobei jedem Teilnehmeridentitätsmodul 111-1 bis 111-N ein Datenpaar mit einer elektronischen Identifikation des Teilnehmeridentitätsmoduls 111-1 bis 111-N und einem öffentlichen kryptographischen Schlüssel eines kryptographischen Schlüsselpaars des Teilnehmeridentitätsmoduls 111-1 bis 111-N zugeordnet ist, wobei das kryptographische Schlüsselpaar den öffentlichen kryptographischen Schlüssel und einen in dem Teilnehmeridentitätsmodul 111-1 bis 111-N gespeicherten privaten kryptographischen Schlüssel umfasst.

Der Profilserver 200 umfasst eine Netzwerkschnittstelle 201, welche ausgebildet ist, ein Datensignal mit der Vielzahl der Datenpaare von einem entfernten Ladeserver 100 über das Kommunikationsnetzwerk 400 zu empfangen.

Die Kommunikation zwischen dem Ladeserver 100 und dem Profilserver 200 findet in einer Ausführungsform über das Kommunikationsnetzwerk 400 statt, das sich von dem Kommunikationsnetzwerk für die Teilnehmerkommunikation unterscheidet. Das Kommunikationsnetzwerk für die Kommunikation zwischen dem Ladeserver 100 und dem Profilserver 200 kann beispielsweise ein drahtgebundenes oder ein drahtloses Kommunikationsnetzwerk sein.

Das Kommunikationsnetzwerk für die Teilnehmerkommunikation ist ein mobiles Kommunikationsnetzwerk, beispielsweise ein 3G, 4G oder 5G Kommunikationsnetzwerk.

In einer Ausführungsform finden die Kommunikation zwischen dem Ladeserver 100 und dem Profilserver 200 sowie die Teilnehmerkommunikation über dasselbe Kommunikationsnetzwerk, beispielsweise über das mobile Kommunikationsnetzwerk statt.

Der Profilserver 200 umfasst ferner einen Prozessor 203, welcher ausgebildet ist, für jedes Datenpaar
- ein Kommunikationsprofil auf der Basis der in dem jeweiligen Datenpaar enthaltenen elektronischen Identifikation bereitzustellen,
- -das bereitgestellte Kommunikationsprofil mit dem in dem Datenpaar enthaltenen öffentlichen kryptographischen Schlüssel zu verschlüsseln, um ein verschlüsseltes Kommunikationsprofil zu erhalten; und
- das verschlüsselte Kommunikationsprofil mit in dem Datenpaar enthaltener elektronischer Identifikation zu verknüpfen, um ein Profildatum mit dem verschlüsselten Kommunikationsprofil und der elektronischen Identifikation zu erhalten.

Die Netzwerkschnittstelle 201 ist ausgebildet, ein Sendesignal mit der Vielzahl der Profildaten über ein Kommunikationsnetzwerk 400 an den entfernten Ladeserver 100 zu übermitteln.

In einer Ausführungsform sind die Kommunikationsprofile eSIM-Profile, wobei die Teilnehmeridentitätsmodule 111-1 bis 111-N eUICC-Module (eUICC: embedded Universal Intergrated Circuit Card) oder iUICC-Module (integrated Universal Integrated Circuit Card) sind.

In einer Ausführungsform ist der Ladeserver 100 kein Element des Profilservers 200.

In einer Ausführungsform formen der Ladeserver 100 und der Profilserver 200 ein Kommunikationssystem gemäß einem eigenständigen Aspekt der Erfindung.

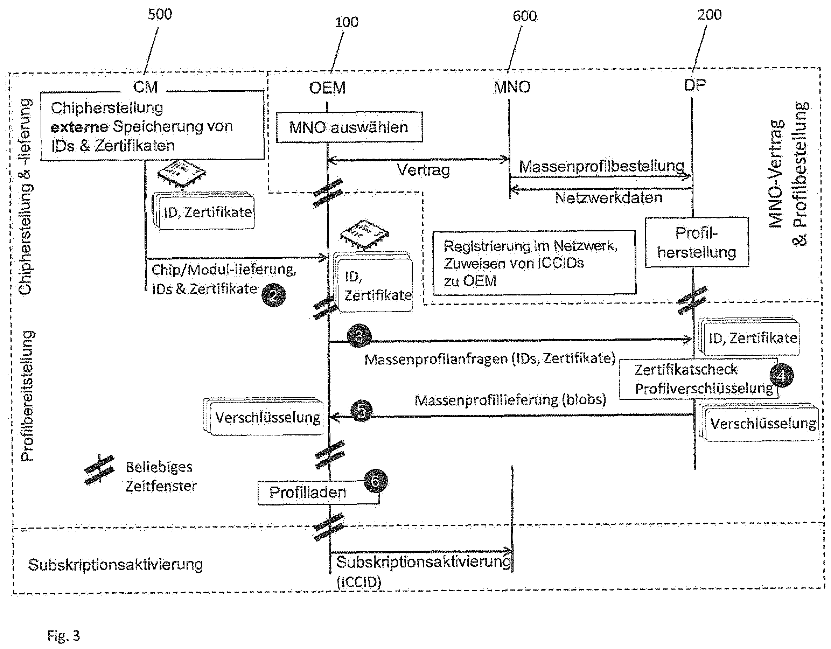

Fig. 3 zeigt schematisch ein Ablauf eines beispielhaften Herstellungsverfahrens zur Herstellung von Kommunikationsfunktionsfähigkeit für Teilnehmeridentitätsmodule.

Gemäß GSMA eSIM Standard werden bei der Herstellung von eUICC Chips (Teilnehmeridentitätsmodul) jedem eine individuelle ID sowie ein individuelles Schlüsselpaar bestehend aus einem öffentlichen kryptographischen Schlüssel Kpub und einem geheimen, privaten kryptographischen Schlüssel Kpriv zugeordnet und auf dem Chip gespeichert. Diese Daten sind vorteilhaft, um das sichere Laden von verschlüsselten Profilen encP zu einem späteren Zeitpunkt zu ermöglichen. Erst nach Installation eines Kommunikationsprofils erhält die eUICC die Funktionalität einer SIM-Karte, wie sie z.B. von 3GPP für Mobilfunknetze bis hin zur neuesten Generationen beschrieben ist.

Unter dem Begriff "Chip" sind vorliegend sämtliche Formen von integrierten Teilnehmeridentitätsmodulen, also auch integrierte SIM-Lösungen gemeint, z.B. Modem SoCs mit integrierter eUICC oder iUICC.

Dem Herstellungsverfahren vorgelagert findet die Herstellung der Teilnehmeridentitätsmodule 111-1 bis 111-N (Chips, eUICC) im Schritt1 statt. Der bei der Herstellung eines jeden Chips generierte öffentliche Schlüssel Kpub wird beispielsweise in Form eines Zertifikats Cert zusammen mit der individuellen ID des Chips in einer Datenbank des Chip-Herstellers (CM) 500 gespeichert. Nach der Produktion von N Chips enthält die Datenbank N Paare (ID, Cert). Alter-nativ können auch N Paare (ID, Kpub) in der Datenbank gespeichert und die Cert später generiert werden.

Im Rahmen der Auslieferung der Chips im Schritt 2 werden die zugehörigen Daten dem Ladeserver 100 des OEMs (Original Equipment Manufacturer) übergeben. Dabei kann die Übermittlung in beliebiger Form, z.B. als elektronischer Lieferschein, erfolgen. Der OEM besitzt jetzt auf seiner Seite N Chips und N zugehörige Datenpaare (ID, Cert).

Für seine Geräteproduktion werden für die Charge 109 insgesamt N passende (d.h. korrekt für die Ziel-Chips verschlüsselte) Kommunikationsprofile benötigt. Dazu übermittelt der Ladeserver die N Datenpaare an den Profilserver 200 (DP), in beliebiger Form, vorzugsweise elektronisch. Der Profilserver 200 hat jetzt auf seiner Seite N Datenpaare (ID, Cert).

### Generierung von Kommunikationsprofilen, Schritt 3:

Da die Daten vorliegen, kann der Profilserver 200 alle N Kommunikationsprofile des Auftrags in einem durchlaufenden Prozess generiert und mit den öffentlichen Schlüsseln Kpub aus den Zertifikaten Cert verschlüsseln. Die Echtheit der Zertifikate kann dabei im Schritt 4 geprüft werden. Es entstehen N verschlüsselte Profile encP.

Der Profilserver 200 erhält die Kommunikationsprofile in einer Ausführungsform von einem Server 600 des Netzwerkbetreibers (MNO).

### Auslieferung von Kommunikationsprofilen, Schritt 5:

Der Profilserver 200 übermittelt die N Datensätze (ID, encP), also die Profildaten, an den Ladeserver 100, wo sie zur späteren Verwendung gespeichert werden können. Die Aufgabe des Profilserver 200 ist damit, unabhängig vom Produktionsprozess des Ladeservers 100, in einer Ausführungsform beendet.

Im Schritt 6 findet das Laden der Kommunikationsprofile auf die Teilnehmeridentitätsmodule 111-1 bis 111-N, beispielsweise eUICC.

Nachgelagert kann die Aktivierung der Kommunikationsprofile erfolgen.

Der Ladeserver 100 ist im vollständigen Besitz aller N Profile encP und kann diese nun zu einem beliebigen Zeitpunkt und unabhängig vom Profilserver 200 seiner Produktion zuführen. Zum Laden wird der Ladeserver 100 die im jeweiligen Teilnehmeridentitätsmodul 111-1 bis 111-N gespeicherte ID auslesen, das zugehörige encP auswählen und es dem Teilnehmeridentitätsmodul 111-1 bis 111-N übergeben. Der jeweilige Teilnehmeridentitätsmodul 111-1 bis 111-N entschlüsselt das Profil mit seinem Kpriv und installiert die Inhalte in an sich bekannter Weise. Dieser Vorgang wird N mal wiederholt bis alle Teilnehmeridentitätsmodule 111-1 bis 111-N mit Profilen ausgestattet sind.

In einer Ausführungsform werden die Teilnehmeridentitätsmodule 111-1 bis 111-N einzeln mit den zugehörigen Kommunikationsprofilen beschickt.

In einer Ausführungsform wird ein Verfahren zur massenhaften Bereitstellung von eSIM Profilen bei dem eine (große) Menge von Profilen bei dem Profilserver 200 bestellt, dort in einem zusammenhängenden Prozess generiert und in einer einzigen Lieferung dem Ladeserver 100 übergeben wird, der sie dann im Rahmen seiner Produktion verwendet, d.h. in verbaute oder nicht verbaute eUICCs bzw. iUICCs oder Chips mit eUICC oder iUICC Funktion lädt.

In einer Ausführungsform sind die Kommunikationsprofile eSIM-Profile, wobei die Teilnehmeridentitätsmodule 111-1 bis 111-N eUICC-Module (eUICC: embedded Universal Intergrated Circuit Card) oder iUICC-Module (integrated Universal Integrated Circuit Card) sind.

Dabei ist der zeitliche Abstand der einzelnen Schritte beliebig, denn sie werden jeweils nur einmal, aber dann bevorzugt für alle Kommunikationsprofile für die Charge 109 durchlaufen. Zusätzlich gibt es keine kritische Online-Verbindung und keine zeitliche Abhängigkeit des Kommunikationsgeräteherstellers von der Performance und Verfügbarkeit des Profilservers 200, sondern der Besteller kann die Profile bevorraten bevor seine Produktion beginnt, bzw. unabhängig von der laufenden Produktion rechtzeitig eine Nachbestellung veranlassen.

Ein weiterer Vorteil ist, dass die Leistung des Profilservers 200 zeitlich begrenzt ist, denn die Profile können alle auf einmal bestellt und alle auf einmal geliefert werden (oder verteilt auf wenige Lieferungen). Dazwischen und danach ist keine andauernde Funktionsbeziehung erforderlich.

## Patentansprüche

1. Ladeserver (100) für die Bereitstellung von Kommunikationsprofilen für eine Charge (109) mit einer Vielzahl von Teilnehmeridentitätsmodulen (111-1 bis 111-N), welche für die Kommunikation über ein Kommunikationsnetzwerk vorgesehen sind, wobei jedem Teilnehmeridentitätsmodul (111-1 bis 111-N) ein Datenpaar mit einer elektronischen Identifikation des Teilnehmeridentitätsmoduls (111-1 bis 111-N) und einem öffentlichen kryptographischen Schlüssel eines kryptographischen Schlüsselpaars des Teilnehmeridentitätsmoduls (111-1 bis 111-N) zugeordnet ist, wobei das kryptographische Schlüsselpaar den öffentlichen kryptographischen Schlüssel und einen in dem Teilnehmeridentitätsmodul (111-1 bis 111-N) gespeicherten privaten kryptographischen Schlüssel umfasst, mit:
einer Netzwerkschnittstelle (101), welche ausgebildet ist, ein Datensignal mit der Vielzahl der Datenpaare an einen entfernten Profilserver (200) über ein Kommunikationsnetzwerk (400) auszusenden, wobei die Netzwerkschnittstelle (101) ferner ausgebildet ist, ansprechend auf das Aussenden der Vielzahl der Datenpaare, die Vielzahl von Profildaten von dem entfernten Profilserver (200) zu empfangen, wobei jedes empfangene Profildatum jeweils einem Teilnehmeridentitätsmodul (111-1 bis 111-N) zugeordnet ist und eine elektronische Identifikation des Teilnehmeridentitätsmoduls (111-1 bis 111-N) sowie ein mit dem ausgesendeten öffentlichen kryptographischen Schlüssel des Teilnehmeridentitätsmoduls (111-1 bis 111-N) verschlüsseltes Kommunikationsprofil umfasst, wobei jedes Kommunikationsprofil zumindest einen Teilnehmerparameter des jeweiligen Teilnehmeridentitätsmoduls für die Kommunikation in einem Kommunikationsnetzwerk, insbesondere einem mobilen Kommunikationsnetzwerk, angibt;
einem Prozessor (103), welcher ausgebildet ist, die verschlüsselten Kommunikationsprofile den Teilnehmeridentitätsmodulen (111-1 bis 111-N) anhand der jeweils empfangenen elektronischen Identifikation zuzuordnen; und
einer Geräteschnittstelle (105), welche mit den Teilnehmeridentitätsmodulen (111-1 bis 111-N) elektronisch verbindbar und ausgebildet ist, die verschlüsselten Kommunikationsprofile zu den Teilnehmeridentitätsmodulen (111-1 bis 111-N) zu übertragen, um die Kommunikationsfunktion in dem jeweiligen Teilnehmeridentitätsmodul (111-1 bis 111-N) herzustellen.

2. Ladeserver (100) nach Anspruch 1, wobei die Netzwerkschnittstelle (101) ausgebildet ist, die Vielzahl der Datenpaare während derselben Datenübertragung, insbesondere als ein elektronisches Datenpacket, an den entfernten Profilserver (200) auszusenden.

3. Ladeserver (100) nach einem der vorstehenden Ansprüche, wobei die Netzwerkschnittstelle (101) ausgebildet ist, die Vielzahl der Datenpaare für die Charge (109) der Teilnehmeridentitätsmodule (111-1 bis 111-N) elektronisch zu empfangen.

4. Ladeserver (100) nach einem der vorstehenden Ansprüche, wobei die Netzwerkschnittstelle (101) ausgebildet ist, die Vielzahl der Datenpaare mit einem kryptographischen Zertifikat, das dem Ladeserver (100) zugeordnet ist, auszusenden, wobei das kryptographische Zertifikat für die Überprüfung der Identität des Ladeservers durch den entfernten Profilserver (200) vorgesehen ist.

5. Ladeserver (100) nach Anspruch 4, wobei der Prozessor (103) ausgebildet ist, die Vielzahl der Datenpaare mit dem kryptographischen Zertifikat datentechnisch zu verknüpfen.

6. Ladeserver (100) nach einem der vorstehenden Ansprüche, wobei die Geräteschnittstelle (105) ausgebildet ist, die Datenpaare aus den Teilnehmeridentitätsmodulen (111-1 bis 111-N) elektronisch auszulesen.

7. Ladeserver (100) nach einem der vorstehenden Ansprüche, welcher ferner einen elektronischen Speicher umfasst, welcher eingerichtet ist, die Vielzahl der Datenpaare und/oder die Vielzahl der Profildaten zu speichern.

8. Ladeserver (100) nach einem der vorstehenden Ansprüche, wobei die Geräteschnittstelle (105) eine drahtgebundene Bus-Schnittstelle für die Bus-Kommunikation, insbesondere für die Ethernet-Buskommunikation, über einen Kommunikationsbus (107), mit den Teilnehmeridentitätsmodulen oder eine USB-Schnittstelle oder eine AT-Schnittstelle für AT-Befehle ist.

9. Ladeserver (100) nach einem der vorstehenden Ansprüche, wobei die Kommunikationsprofile SIM-Profile sind (SIM: embedded Subscriber Identity Module, Teilnehmeridentitätsmodul) und wobei die Teilnehmeridentitätsmodule (111-1 bis 111-N) eUICC- oder iUICC-Module (eUICC: embedded Universal Intergrated Circuit Card, iUICC: integrated Universal Intergrated Circuit Card) sind.

10. Ladeserver (100) nach einem der vorstehenden Ansprüche, wobei jedes Kommunikationsprofil eine Teilnehmeridentifikation (IMSI) und einen kryptographischen (K) zum Zugang zu einem mobilen Kommunikationsnetzwerk umfasst.

11. Profilserver (200) für die Bereitstellung von Kommunikationsprofilen für eine Charge (109) mit einer Vielzahl von Teilnehmeridentitätsmodulen (111-1 bis 111-N), welche für die Kommunikation über ein Kommunikationsnetzwerk vorgesehen sind, wobei jedes Kommunikationsprofil zumindest einen Teilnehmerparameter des jeweiligen Teilnehmeridentitätsmoduls für die Kommunikation in dem Kommunikationsnetzwerk angibt, wobei jedem Teilnehmeridentitätsmodul (111-1 bis 111-N) ein Datenpaar mit einer elektronischen Identifikation des Teilnehmeridentitätsmoduls (111-1 bis 111-N) und einem öffentlichen kryptographischen Schlüssel eines kryptographischen Schlüsselpaars des Teilnehmeridentitätsmoduls (111-1 bis 111-N) zugeordnet ist, wobei das kryptographische Schlüsselpaar den öffentlichen kryptographischen Schlüssel und einen in dem Teilnehmeridentitätsmodul (111-1 bis 111-N) gespeicherten privaten kryptographischen Schlüssel umfasst, mit:
einer Netzwerkschnittstelle (201), welche ausgebildet ist, ein Datensignal mit der Vielzahl der Datenpaare von einem entfernten Ladeserver (100) über ein Kommunikationsnetzwerk (400) zu empfangen;
einem Prozessor (203), welcher ausgebildet ist, für jedes Datenpaar
- ein Kommunikationsprofil auf der Basis der in dem jeweiligen Datenpaar enthaltenen elektronischen Identifikation bereitzustellen,
- das bereitgestellte Kommunikationsprofil mit dem in dem Datenpaar enthaltenen öffentlichen kryptographischen Schlüssel zu verschlüsseln, um ein verschlüsseltes Kommunikationsprofil zu erhalten; und
- das verschlüsselte Kommunikationsprofil mit in dem Datenpaar enthaltenen elektronischen Identifikation zu verknüpfen, um ein Profildatum mit dem verschlüsselten Kommunikationsprofil und der elektronischen Identifikation zu erhalten; wobei
die Netzwerkschnittstelle (201) ausgebildet ist, ein Sendesignal mit der Vielzahl der Profildaten über das Kommunikationsnetzwerk (400) an den entfernten Ladeserver (100) zu übermitteln.

12. Profilserver (200) nach Anspruch 11, wobei der Prozessor (203) ausgebildet ist, die Kommunikationsprofile aus einem Speicher auszulesen oder zu erzeugen, insbesondere durch Angabe des Teilnehmerparameters zu erzeugen, wobei die Kommunikationsprofile der Charge der Teilnehmeridentitätsmodule (111-1 bis 111-N) identisch sind.

13. Verfahren zum Bereitstellen von Kommunikationsprofilen für eine Charge (109) mit einer Vielzahl von Teilnehmeridentitätsmodulen (111-1 bis 111-N), welche für die Kommunikation über ein Kommunikationsnetzwerk vorgesehen sind, wobei jedem Teilnehmeridentitätsmodul (111-1 bis 111-N) ein Datenpaar mit einer elektronischen Identifikation des Teilnehmeridentitätsmoduls (111-1 bis 111-N) und einem öffentlichen kryptographischen Schlüssel eines kryptographischen Schlüsselpaars des Teilnehmeridentitätsmoduls (111-1 bis 111-N) zugeordnet ist, wobei das kryptographische Schlüsselpaar den öffentlichen kryptographischen Schlüssel und einen in dem Teilnehmeridentitätsmodul (111-1 bis 111-N) gespeicherten privaten kryptographischen Schlüssel umfasst, mit:
Aussenden eines Datensignals mit der Vielzahl der Datenpaare an einen entfernten Profilserver (200) über ein Kommunikationsnetzwerk (400) durch einen Ladeserver (100);
ansprechend auf das Aussenden der Vielzahl der Datenpaare, Empfangen der Vielzahl von Profildaten von dem entfernten Profilserver (200) durch den Ladeserver (100), wobei jedes empfangene Profildatum jeweils einem Teilnehmeridentitätsmodul (111-1 bis 111-N) zugeordnet ist und eine elektronische Identifikation des Teilnehmeridentitätsmoduls (111-1 bis 111-N) sowie ein mit dem ausgesendeten öffentlichen Schlüssel des Teilnehmeridentitätsmoduls verschlüsseltes Kommunikationsprofil angibt, wobei jedes Kommunikationsprofil zumindest einen Teilnehmerparameter des jeweiligen Teilnehmeridentitätsmoduls für die Kommunikation in dem Kommunikationsnetzwerk umfasst;
Zuordnen der verschlüsselten Kommunikationsprofile zu den Teilnehmeridentitätsmodulen (111-1 bis 111-N) anhand der empfangenen elektronischen Identifikationen durch den Ladeserver (100); und
Übertragen der verschlüsselten Kommunikationsprofile zu den Teilnehmeridentitätsmodulen (111-1 bis 111-N) durch den Ladeserver (100), um die Kommunikationsfunktion in jedem Teilnehmeridentitätsmodul (111-1 bis 111-N) herzustellen.

14. Verfahren nach Anspruch 13, mit:
Empfangen eines Datensignals mit der Vielzahl der Datenpaare von dem entfernten Ladeserver (100) über das Kommunikationsnetzwerk (400) durch einen Profilserver (200);
für jedes Datenpaar:
- Bereitstellen eines Kommunikationsprofils auf der Basis der in dem jeweiligen Datenpaar enthaltenen elektronischen Identifikation durch den Profilserver (200),
- Verschlüsseln des bereitgestellten Kommunikationsprofils mit dem in dem Datenpaar enthaltenen öffentlichen kryptographischen Schlüssel durch den Profilserver (200), um ein verschlüsseltes Kommunikationsprofil zu erhalten;
- Verknüpfen des verschlüsselten Kommunikationsprofils mit in dem Datenpaar enthaltenen elektronischen Identifikation durch den Profilserver (200), um ein Profildatum mit dem verschlüsselten Kommunikationsprofil und der elektronischen Identifikation zu erhalten; und
Aussenden eines Sendesignals mit der Vielzahl der Profildaten durch den Profilserver (200) über das Kommunikationsnetzwerk an den entfernten Ladeserver (100).

15. Verfahren für die Bereitstellung von Kommunikationsprofilen für eine Charge (109) mit einer Vielzahl von Teilnehmeridentitätsmodulen (111-1 bis 111-N), welche für die Gerät-zu-Gerät-Kommunikation über ein Kommunikationsnetzwerk vorgesehen sind, wobei jedes Kommunikationsprofil zumindest einen Teilnehmerparameter des jeweiligen Teilnehmeridentitätsmoduls für die Kommunikation in dem Kommunikationsnetzwerk angibt, wobei jedem Teilnehmeridentitätsmodul (111-1 bis 111-N) ein Datenpaar mit einer elektronischen Identifikation des Teilnehmeridentitätsmoduls (111-1 bis 111-N) und einem öffentlichen kryptographischen Schlüssel eines kryptographischen Schlüsselpaars des Teilnehmeridentitätsmoduls (111-1 bis 111-N) zugeordnet ist, wobei das jeweilige kryptographische Schlüsselpaar den öffentlichen kryptographischen Schlüssel und einen in dem Teilnehmeridentitätsmodul (111-1 bis 111-N) gespeicherten privaten kryptographischen Schlüssel umfasst, mit:
Empfangen eines Datensignals mit der Vielzahl der Datenpaare von einem entfernten Ladeserver (100) über ein Kommunikationsnetzwerk (400) durch einen Profilserver (200);
für jedes Datenpaar:
- Bereitstellen eines Kommunikationsprofils auf der Basis der in dem jeweiligen Datenpaar enthaltenen elektronischen Identifikation durch den Profilserver (200),
- Verschlüsseln des bereitgestellten Kommunikationsprofils mit dem in dem Datenpaar enthaltenen öffentlichen kryptographischen Schlüssel durch den Profilserver (200), um ein verschlüsseltes Kommunikationsprofil zu erhalten;
- Verknüpfen des verschlüsselten Kommunikationsprofils mit in dem Datenpaar enthaltenen elektronischen Identifikation durch den Profilserver (200), um ein Profildatum mit dem verschlüsselten Kommunikationsprofil und der elektronischen Identifikation zu erhalten; und
Aussenden eines Sendesignals mit der Vielzahl der Profildaten durch den Profilserver (200) über das Kommunikationsnetzwerk (400) an den entfernten Ladeserver (100).

## Geänderte Patentansprüche

### Geänderte Patentansprüche gemäss Regel 137(2) EPÜ.

1. Ladeserver (100) für die Bereitstellung von Kommunikationsprofilen für eine Charge (109) mit einer Vielzahl von Teilnehmeridentitätsmodulen (111-1 bis 111-N), welche für die Kommunikation über ein Kommunikationsnetzwerk (400) vorgesehen sind, wobei jedem Teilnehmeridentitätsmodul (111-1 bis 111-N) ein Datenpaar mit einer elektronischen Identifikation (eID) des Teilnehmeridentitätsmoduls (111-1 bis 111-N) und einem öffentlichen kryptographischen Schlüssel eines kryptographischen Schlüsselpaars des Teilnehmeridentitätsmoduls (111-1 bis 111-N) zugeordnet ist, wobei das kryptographische Schlüsselpaar den öffentlichen kryptographischen Schlüssel und einen in dem Teilnehmeridentitätsmodul (111-1 bis 111-N) gespeicherten privaten kryptographischen Schlüssel umfasst, mit:
einer Netzwerkschnittstelle (101), welche ausgebildet ist, ein Datensignal mit der Vielzahl der Datenpaare an einen entfernten Profilserver (200) über das Kommunikationsnetzwerk (400) auszusenden, wobei die Netzwerkschnittstelle (101) ferner ausgebildet ist, ansprechend auf das Aussenden der Vielzahl der Datenpaare, eine Vielzahl von Profildaten von dem entfernten Profilserver (200) zu empfangen, wobei jedes empfangene Profildatum jeweils einem Teilnehmeridentitätsmodul (111-1 bis 111-N) zugeordnet ist und eine elektronische Identifikation des Teilnehmeridentitätsmoduls (111-1 bis 111-N) sowie ein mit dem ausgesendeten öffentlichen kryptographischen Schlüssel des Teilnehmeridentitätsmoduls (111-1 bis 111-N) verschlüsseltes Kommunikationsprofil umfasst, wobei jedes Kommunikationsprofil zumindest einen Teilnehmerparameter des jeweiligen Teilnehmeridentitätsmoduls für die Kommunikation in dem Kommunikationsnetzwerk (400) angibt;
einem Prozessor (103), welcher ausgebildet ist, die verschlüsselten Komm-unikationsprofile den Teilnehmeridentitätsmodulen (111-1 bis 111-N) anhand der jeweils empfangenen elektronischen Identifikation zuzuordnen; und
einer Geräteschnittstelle (105), welche mit den Teilnehmeridentitätsmodulen (111-1 bis 111-N) elektronisch verbindbar und ausgebildet ist, die verschlüsselten Kommunikationsprofile zu den Teilnehmeridentitätsmodulen (111-1 bis 111-N) zu übertragen, um die Kommunikationsfunktion in dem jeweiligen Teilnehmeridentitätsmodul (111-1 bis 111-N) herzustellen,
wobei der Ladeserver ausgebildet ist, die verschlüsselten Kommunikationsprofile zu einem beliebigen Zeitpunkt und unabhängig von dem Profilserver (200) in die Teilnehmeridentitätsmodule (111-1 bis 111-N) zu laden, und dazu eine in dem jeweiligen Teilnehmeridentitätsmodul (111-1 bis 111-N) gespeicherte ID auszulesen, das zugehörige Kommunikationsprofil auszuwählen und es dem jeweiligen Teilnehmeridentitätsmodul (111-1 bis 111-N) zu übergeben.

2. Ladeserver (100) nach Anspruch 1, wobei die Netzwerkschnittstelle (101) ausgebildet ist, die Vielzahl der Datenpaare während derselben Datenübertragung, insbesondere als ein elektronisches Datenpaket, an den entfernten Profilserver (200) auszusenden.

3. Ladeserver (100) nach einem der vorstehenden Ansprüche, wobei die Netzwerkschnittstelle (101) ausgebildet ist, die Vielzahl der Datenpaare für die Charge (109) der Teilnehmeridentitätsmodule (111-1 bis 111-N) elektronisch zu empfangen.

4. Ladeserver (100) nach einem der vorstehenden Ansprüche, wobei die Netzwerkschnittstelle (101) ausgebildet ist, die Vielzahl der Datenpaare mit einem kryptographischen Zertifikat, das dem Ladeserver (100) zugeordnet ist, auszusenden, wobei das kryptographische Zertifikat für die Überprüfung der Identität des Ladeservers durch den entfernten Profilserver (200) vorgesehen ist.

5. Ladeserver (100) nach Anspruch 4, wobei der Prozessor (103) ausgebildet ist, die Vielzahl der Datenpaare mit dem kryptographischen Zertifikat datentechnisch zu verknüpfen.

6. Ladeserver (100) nach einem der vorstehenden Ansprüche, wobei die Geräteschnittstelle (105) ausgebildet ist, die Datenpaare aus den Teilnehmeridentitätsmodulen (111-1 bis 111-N) elektronisch auszulesen.

7. Ladeserver (100) nach einem der vorstehenden Ansprüche, welcher ferner einen elektronischen Speicher umfasst, welcher eingerichtet ist, die Vielzahl der Datenpaare und/oder die Vielzahl der Profildaten zu speichern.

8. Ladeserver (100) nach einem der vorstehenden Ansprüche, wobei die Geräteschnittstelle (105) eine drahtgebundene Bus-Schnittstelle für eine BusKommunikation, insbesondere für eine Ethernet-Buskommunikation, über einen Kommunikationsbus (107), mit den Teilnehmeridentitätsmodulen oder eine USB-Schnittstelle oder eine AT-Schnittstelle für AT-Befehle ist.

9. Ladeserver (100) nach einem der vorstehenden Ansprüche, wobei die Kommunikationsprofile SIM-Profile sind und wobei die Teilnehmeridentitätsmodule (111-1 bis 111-N) eUICC- oder iUICC-Module sind.

10. Ladeserver (100) nach einem der vorstehenden Ansprüche, wobei jedes Kommunikationsprofil eine Teilnehmeridentifikation, IMSI, und einen kryptographischen Schlüssel, K, zum Zugang zu einem mobilen Kommunikationsnetzwerk umfasst.

11. Profilserver (200) für die Bereitstellung von Kommunikationsprofilen für eine Charge (109) mit einer Vielzahl von Teilnehmeridentitätsmodulen (111-1 bis 111-N), welche für die Kommunikation über ein Kommunikationsnetzwerk (400) vorgesehen sind, wobei jedes Kommunikationsprofil zumindest einen Teilnehmerparameter des jeweiligen Teilnehmeridentitätsmoduls für die Kommunikation in dem Kommunikationsnetzwerk (400) angibt, wobei jedem Teilnehmeridentitätsmodul (111-1 bis 111-N) ein Datenpaar mit einer elektronischen Identifikation (eID) des Teilnehmeridentitätsmoduls (111-1 bis 111-N) und einem öffentlichen kryptographischen Schlüssel eines kryptographischen Schlüsselpaars des Teilnehmeridentitätsmoduls (111-1 bis 111-N) zugeordnet ist, wobei das kryptographische Schlüsselpaar den öffentlichen kryptographischen Schlüssel und einen in dem Teilnehmeridentitätsmodul (111-1 bis 111-N) gespeicherten privaten kryptographischen Schlüssel umfasst, mit:
einer Netzwerkschnittstelle (201), welche ausgebildet ist, ein Datensignal mit der Vielzahl der Datenpaare von einem entfernten Ladeserver über das Kommunikationsnetzwerk zu empfangen;
einem Prozessor (203), welcher ausgebildet ist, für jedes Datenpaar
- ein Kommunikationsprofil auf der Basis der in dem jeweiligen Datenpaar enthaltenen elektronischen Identifikation bereitzustellen,
- -das bereitgestellte Kommunikationsprofil mit dem in dem Datenpaar enthaltenen öffentlichen kryptographischen Schlüssel zu verschlüsseln, um ein verschlüsseltes Kommunikationsprofil zu erhalten; und
- das verschlüsselte Kommunikationsprofil mit der in dem Datenpaar enthaltenen elektronischen Identifikation zu verknüpfen, um ein Profildatum mit dem verschlüsselten Kommunikationsprofil und der elektronischen Identifikation zu erhalten; wobei
die Netzwerkschnittstelle (201) ausgebildet ist, ein Sendesignal mit der Vielzahl der Profildaten über das Kommunikationsnetzwerk (400) an den entfernten Ladeserver (100) zu übermitteln und den Ladeserver in die Lage zu versetzen, die verschlüsselten Kommunikationsprofile zu einem beliebigen Zeitpunkt und unabhängig von dem Profilserver (200) in die Teilnehmeridentitätsmodule (111-1 bis 111-N) zu laden, und dazu eine in dem jeweiligen Teilnehmeridentitätsmodul (111-1 bis 111-N) gespeicherte ID auszulesen, das zugehörige Kommunikationsprofil auszuwählen und es dem jeweiligen Teilnehmeridentitätsmodul (111-1 bis 111-N) zu übergeben.

12. Profilserver (200) nach Anspruch 11, wobei der Prozessor (203) ausgebildet ist, die Kommunikationsprofile aus einem Speicher auszulesen oder zu erzeugen, wobei die Kommunikationsprofile der Charge der Teilnehmeridentitätsmodule (111-1 bis 111-N) denselben Teilnehmerparameter wie eine Netzwerkadresse, Kommunikationsdatenrate, Sendeleistung, Sende- oder Emfpangscodierung, Modulationsschema, Übertragungstechnologie, Datensendeschema, Netzwerkadresse, an welche Daten auszusenden sind, aufweisen.

13. Verfahren zum Bereitstellen von Kommunikationsprofilen für eine Charge (109) mit einer Vielzahl von Teilnehmeridentitätsmodulen (111-1 bis 111-N), welche für die Kommunikation über ein Kommunikationsnetzwerk (400) vorgesehen sind, wobei jedem Teilnehmeridentitätsmodul (111-1 bis 111-N) ein Datenpaar mit einer elektronischen Identifikation (eID) des Teilnehmeridentitätsmoduls (111-1 bis 111-N) und einem öffentlichen kryptographischen Schlüssel eines kryptographischen Schlüsselpaars des Teilnehmeridentitätsmoduls (111-1 bis 111-N) zugeordnet ist, wobei das kryptographische Schlüsselpaar den öffentlichen kryptographischen Schlüssel und einen in dem Teilnehmeridentitätsmodul (111-1 bis 111-N) gespeicherten privaten kryptographischen Schlüssel umfasst, mit:
Aussenden eines Datensignals mit der Vielzahl der Datenpaare an einen entfernten Profilserver (200) über das Kommunikationsnetzwerk durch einen Ladeserver (100);
ansprechend auf das Aussenden der Vielzahl der Datenpaare, Empfangen der Vielzahl von Profildaten von dem entfernten Profilserver (200) durch den Ladeserver (100), wobei jedes empfangene Profildatum jeweils einem Teilnehmeridentitätsmodul (111-1 bis 111-N) zugeordnet ist und eine elektronische Identifikation des Teilnehmeridentitätsmoduls (111-1 bis 111-N) sowie ein mit dem ausgesendeten öffentlichen Schlüssel des Teilnehmeridentitätsmoduls verschlüsseltes Kommunikationsprofil angibt, wobei jedes Kommunikationsprofil zumindest einen Teilnehmerparameter des jeweiligen Teilnehmeridentitätsmoduls für die Kommunikation in dem Kommunikationsnetzwerk umfasst;
Zuordnen der verschlüsselten Kommunikationsprofile zu den Teilnehmeridentitätsmodulen (111-1 bis 111-N) anhand der empfangenen elektronischen Identifikationen durch den Ladeserver (100); und
Übertragen der verschlüsselten Kommunikationsprofile zu den Teilnehmeridentitätsmodulen (111-1 bis 111-N) durch den Ladeserver (100), um die Kommunikationsfunktion in jedem Teilnehmeridentitätsmodul (111-1 bis 111-N) herzustellen, wobei das Übertragen der verschlüsselten Kommunikationsprofile zu den Teilnehmeridentitätsmodulen (111-1 bis 111-N) zu einem beliebigen Zeitpunkt und unabhängig von dem Profilserver (200) erfolgt, und dazu eine in dem jeweiligen Teilnehmeridentitätsmodul (111-1 bis 111-N) gespeicherte ID ausgelesen wird, das zugehörige Kommunikationsprofil ausgewählt wird und es an das jeweilige Teilnehmeridentitätsmodul (111-1 bis 111-N) übergeben wird.

14. Verfahren nach Anspruch 13, mit:
Empfangen eines Datensignals mit der Vielzahl der Datenpaare von dem entfernten Ladeserver (100) über das Kommunikationsnetzwerk (400) durch einen Profilserver (200);
für jedes Datenpaar:
- Bereitstellen eines Kommunikationsprofils auf der Basis der in dem jeweiligen Datenpaar enthaltenen elektronischen Identifikation durch den Profilserver (200),
- Verschlüsseln des bereitgestellten Kommunikationsprofils mit dem in dem Datenpaar enthaltenen öffentlichen kryptographischen Schlüssel durch den Profilserver (200), um ein verschlüsseltes Kommunikationsprofil zu erhalten;
- Verknüpfen des verschlüsselten Kommunikationsprofils mit der in dem Datenpaar enthaltenen elektronischen Identifikation durch den Profilserver (200), um ein Profildatum mit dem verschlüsselten Kommunikationsprofil und der elektronischen Identifikation zu erhalten; und
Aussenden eines Sendesignals mit der Vielzahl der Profildaten durch den Profilserver (200) über das Kommunikationsnetzwerk an den entfernten Ladeserver (100).

15. Verfahren für die Bereitstellung von Kommunikationsprofilen für eine Charge (109) mit einer Vielzahl von Teilnehmeridentitätsmodulen (111-1 bis 111-N), welche für die Gerätzu-Gerät-Kommunikation über ein Kommunikationsnetzwerk (400) vorgesehen sind, wobei jedes Kommunikationsprofil zumindest einen Teilnehmerparameter des jeweiligen Teilnehmeridentitätsmoduls für die Kommunikation in dem Kommunikationsnetzwerk (400) angibt, wobei jedem Teilnehmeridentitätsmodul (111-1 bis 111-N) ein Datenpaar mit einer elektronischen Identifikation (eID) des Teilnehmeridentitätsmoduls (111-1 bis 111-N) und einem öffentlichen kryptographischen Schlüssel eines kryptographischen Schlüsselpaars des Teilnehmeridentitätsmoduls (111-1 bis 111-N) zugeordnet ist, wobei das jeweilige kryptographische Schlüsselpaar den öffentlichen kryptographischen Schlüssel und einen in dem Teilnehmeridentitätsmodul (111-1 bis 111-N) gespeicherten privaten kryptographischen Schlüssel umfasst, mit:
Empfangen eines Datensignals mit der Vielzahl der Datenpaare von einem entfernten Ladeserver (100) über das Kommunikationsnetzwerk durch einen Profilserver (200);
für jedes Datenpaar:
- Bereitstellen eines Kommunikationsprofils auf der Basis der in dem jeweiligen Datenpaar enthaltenen elektronischen Identifikation durch den Profilserver (200),
- Verschlüsseln des bereitgestellten Kommunikationsprofils mit dem in dem Datenpaar enthaltenen öffentlichen kryptographischen Schlüssel durch den Profilserver (200), um ein verschlüsseltes Kommunikationsprofil zu erhalten;
- Verknüpfen des verschlüsselten Kommunikationsprofils mit der in dem Datenpaar enthaltenen elektronischen Identifikation durch den Profilserver (200), um ein Profildatum mit dem verschlüsselten Kommunikationsprofil und der elektronischen Identifikation zu erhalten; und
Aussenden eines Sendesignals mit der Vielzahl der Profildaten durch den Profilserver (200) über das Kommunikationsnetzwerk an den entfernten Ladeserver (100), wobei das Sendesignal den Ladeserver in die Lage versetzt, die verschlüsselten Kommunikationsprofile zu einem beliebigen Zeitpunkt und unabhängig von dem Profilserver (200) in die Teilnehmeridentitätsmodule (111-1 bis 111-N) zu laden, und dazu eine in dem jeweiligen Teilnehmeridentitätsmodul (111-1 bis 111-N) gespeicherte ID auszulesen, das zugehörige Kommunikationsprofil auszuwählen und es dem jeweiligen Teilnehmeridentitätsmodul (111-1 bis 111-N) zu übergeben.
